# EUROPÄISCHE PATENTSCHRIFT

(11) **EP 2 134 194 B1**
(45) Veröffentlichungstag und Bekanntmachung des Hinweises auf die Patenterteilung: **02.05.2012**
(21) Anmeldenummer: 08717406.6
(22) Anmeldetag: 05.03.2008
(51) Int. Cl.: A23L 1/226, A23L 1/236

(54) **VERFAHREN ZUR GESCHMACKSMODULATION VON STOFFLICHEN ZUSAMMENSETZUNGEN, DIE MINDESTENS EINEN HIGH INTENSITY SWEETENER (HIS) ENTHALTEN**
METHOD FOR MODULATING THE TASTE OF MATERIAL COMPOSITIONS CONTAINING AT LEAST ONE HIGH INTENSITY SWEETENER (HIS)
PROCÉDÉ DE MODULATION DU GOÛT DE COMPOSITIONS DE MATIÈRES QUI CONTIENNENT AU MOINS UN ÉDULCORANT DE HAUTE INTENSITÉ

(43) Veröffentlichungstag der Anmeldung: 23.12.2009
(73) Patentinhaber: B.R.A.I.N. Biotechnology Research And Information Network AG, 64673 Zwingenberg (DE)
(72) Erfinder: MATUSCHEK, Markus, 69469 Weinheim (DE); JAGER, Martin B., 67677 Enkenbach-Alsenborn (DE); KLEBER, Alice, 64625 Bensheim (DE); ZINKE, Holger, 64673 Zwingenberg (DE); KROHN, Micheal, 64653 Lorsch, (DE)
(74) Vertreter: Vossius & Partner
(86) Internationale Anmeldenummer: PCT/EP2008/052656
(87) Internationale Veröffentlichungsnummer: WO 2009/109226

(56) Entgegenhaltungen:
- WO-A-00/69283
- WO-A-03/086293
- WO-A-2007/061795
- DE-A1- 2 060 634
- GB-A- 2 116 820
- US-A- 3 773 526
- US-A- 3 934 047
- US-A- 5 028 625
- US-A- 5 639 788
- US-A1- 2008 003 339
- US-B1- 6 472 000

## Beschreibung

### Gebiet der Erfindung

Die vorliegende Erfindung betrifft ein neues Verfahren zur Geschmacksmodulation, insbesondere zur Reduktion von bitterem Geschmack und Nachgeschmack, von stofflichen Zusammensetzungen, die mindestens einen High Intensity Sweetener (HIS) enthalten.

### Stand der Technik

Stoffliche Zusammensetzungen wie Lebensmittel, Getränke, Genussmittel, Süßungsmittel, Tiernahrungsmittel, Kosmetika und Pharmazeutika enthalten häufig Geschmacksstoffe, die grundsätzlich unerwünscht oder in der vorhandenen Intensität zu dominant oder zu niedrig sind. Im Bereich der Süßungsmittel treten häufig neben den süßen Geschmackseindrücken weitere Geschmackseindrücke wie z.B. ein metallischer, chemischer, bitterer oder synthetischer Geschmack oder Nachgeschmack auf, die den Gesamtgeschmackseindruck der zu süßenden Zusammensetzung nachteilig beeinflussen. Im Rahmen der vorliegenden Erfindung wird unter Geschmack der unmittelbare Geschmackseindruck verstanden, der entsteht, während sich die Zusammensetzung im Mund befindet. Unter Nachgeschmack wird die Geschmackswahrnehmung nach dem Abschlucken, insbesondere nach einer Wartezeit von etwa 30 Sekunden, verstanden.

Beispielsweise sind Koffein in Tee oder Kaffee sowie Hopfenextrakte in Bier natürliche Bitterstoffe, welche jedoch in zu hoher Konzentration einen negativen Geschmackseindruck hervorrufen. In speziellen Bittergetränken wie beispielsweise Tonic Water oder Bitter Lemon ist ein charakteristischer Bittergeschmack, hervorgerufen durch den Zusatzstoff Chinin, in besonderem Maße erwünscht. Andererseits ist insbesondere der bittere Geschmack oder Nachgeschmack vieler künstlicher Süßstoffe wie beispielsweise Acesulfam K (ACK) und Saccharin ein unerwünschter Nebengeschmack des Süßstoffes in anderen Limonaden. Auch Fruchtsäfte, insbesondere Orangensaft, leiden unter der Beeinträchtigung des Geschmackes durch z.B. Flavonoidglykoside, welche einen bitteren Geschmack haben. Auch viele pharmazeutische Wirkstoffe, insbesondere Ibuprofen haben einen stark bitteren Geschmack, welcher zur Reduktion der Akzeptanz bei der Einnahme des Wirkstoffes führt.

Zur Reduktion des natürlichen Bittergeschmacks beispielsweise von Tee, Kaffee oder Orangensaft werden diese Lebensmittel, Getränke, Genussmittel entweder enzymatisch behandelt, um die bitter schmeckenden Substanzen zu zerstören, oder die bittere Substanz wird wie im Falle des Koffeins im Tee bzw. Kaffee durch Entkoffeinierung entfernt.

Eine andere Möglichkeit besteht darin, den bitter schmeckenden Wirkstoff durch Formulierungstechniken wie z.B. in Tabletten einzuschließen. Der bitter schmeckende Wirkstoff wird dann nicht im Mund freigesetzt, sondern erst im Magen-Darm-Trakt.

Eine weitere Möglichkeit der Modifikation des Geschmackseindrucks stellt die Zugabe von Geschmacksmodulatoren oder Aromen zu den gewünschten Lebensmitteln, Getränken, Genussmitteln, Tiernahrungsmitteln, Süßungsmitteln, Kosmetika und Pharmazeutika dar.

Es ist daher wünschenswert, Stoffe zu finden, die unangenehme Geschmackseindrücke unterdrücken oder reduzieren sowie gewünschte Geschmackseindrücke gezielt verstärken oder zumindest nicht negativ beeinflussen.

Insbesondere im Bereich der Pharmawirkstoffe sind eine ganze Reihe von, insbesondere bittermodifizierenden, Substanzen bekannt. So wird beispielsweise der bittere Geschmack von Ibuprofen durch Polylysine und Polyarginine (vgl. die internationale Patentanmeldung WO 2003/086293), durch Meglumin-Salz (vgl. das amerikanische Patent US 5,028,625), durch Natriumchlorid oder Natrium-Sacharin (vgl. die internationale Patentanmeldung WO 2003/047550) oder durch Hydroxypropyl-beta-cyclodextrin oder kaubare Methacrylsäurecopolymerisate (vgl. Modifying Bitterness, Mechanism, Ingredients And Applications, Glenn Roy, 1997) maskiert, um die Einnahme durch die Patienten zu erleichtern. Auch Koffein lässt sich durch eine Vielzahl von Geschmacksmodulatoren in seiner Bitterkeit reduzieren wie beispielsweise durch Glutaminsäure, Dicalcium-disalicylat, Stärke, Lactose, Manitol sowie durch Phosphatidsäure und beta-Lactoglobulin (vgl. Glenn Roy, 1997) und weiterhin durch Hydroxybenzoesäureamide insbesondere Hydroxybenzoesäurevanillylamide (vgl. Ley et al., Journal of Agricultural & Food Chemistry, 2006).

Weitere Stoffe, die zur Reduktion eines Bittergeschmacks im Allgemeinen und insbesondere in Pharmazeutika und Lebensmittel eingesetzt wurden, sind Lecithin, Ascorbat und Citrat (vgl. die japanische Patentanmeldung JP 2001226293), Ester von Mono-oder Diglyceriden wie Glycerinmonostearat und Polycarbonsäuren wie Succinsäure (vgl. die europäische Patentanmeldung EP 0 732 064 A1), Hydroxyflavanone (vgl. die europäische Patentanmeldung EP 1 258 200 A1), 2-Phenyl-4-chromanonderivate (vgl. die deutsche Patentanmeldung DE 101 22 898), Natriumsulfathydrat (vgl. die japanische Patentanmeldung JP 02025428). Aus dem amerikanischen Patent US 5,637,618 ist weiterhin die Verwendung von Benzoesäurederivaten zur Reduktion des Bittergeschmacks in Getränken sowie von Süßstoffen und von Kaliumchlorid bekannt. Der Bittergeschmack von Kaliumchlorid wird auch mit Hilfe von 2,4-Dihydroxybenzoesäure, Carrageenan und Thaumatin gehemmt (vgl. Glenn Roy, 1997; das amerikanische Patent US 5639788 das amerikanische Patent US 5,637,618 sowie die japanischen Patentanmeldungen JP 04262758 und JP 07083684).

Die bekannten Geschmacksmodulatoren befriedigen aber nicht in vollem Umfang, insbesondere wenn sie zur Reduktion des Bittergeschmacks von stofflichen Zusammensetzungen wie z.B. Lebensmittel, Getränke, Genussmittel, Süßungsmittel, Tierahrungsmittel, Kosmetika und Pharmazeutika, die mindestens einen HIS enthalten, insbesondere von HIS enthaltenden Erfrischungsgetränken, verwendet werden sollen. Ihre die Bitterkeit reduzierende Wirkung ist häufig nicht ausreichend. Wird aus diesem Grunde die Konzentration der bekannten Geschmacksmodulatoren erhöht, um eine ausreichende Wirkung zu erzielen, kann es zu unerwünschten physiologischen oder physikalischen und/oder chemischen Wechselwirkungen mit den übrigen Bestandteilen der jeweiligen Zusammensetzungen und/oder zu einer nachteiligen Beeinflussung, insbesondere zu einer Verschlechterung bis hin zu einer völligen Verfälschung ihres charakteristischen Geschmackseindrucks, kommen.

### Aufgabe der Erfindung

Demgemäß lag der vorliegenden Erfindung die Aufgabe zu Grunde, ein neues Verfahren zur Geschmacksmodulation insbesondere zur Reduktion von bitterem Geschmack und Nachgeschmack, von stofflichen Zusammensetzungen, die mindestens einen High Intensity Sweetener (HIS) enthalten, insbesondere von Lebensmitteln, Getränken, Genussmitteln, Süßungsmitteln, Tiernahrungsmitteln, Kosmetika und Pharmazeutika, die mindestens einen HIS enthalten, zu finden.

Das neue Verfahren zur Geschmacksmodulation soll bewirken, dass durch die eingesetzten Geschmacksmodulatoren keine unerwünschten physiologischen oder physikalischen und/oder chemischen Wechselwirkungen mit den übrigen Bestandteilen der jeweiligen Zusammensetzungen, insbesondere der Lebensmittel, Getränke, Genussmittel, Süßungsmittel, Tiernahrungsmitteln, Kosmetika und Pharmazeutika, hervorgerufen werden und der charakteristische Geschmackseindruck nicht nachteilig beeinflusst, insbesondere nicht verschlechtert oder völlig verfälscht wird.

Insbesondere soll es das neue Verfahren ermöglichen, den bitteren Geschmack und den bitteren Nachgeschmack von stofflichen Zusammensetzungen, die mindestens einen HIS enthalten, signifikant zu reduzieren.

### Erfindungsgemäße Lösung

Demgemäß wurde das neue Verfahren zur Geschmacksmodulation von stofflichen Zusammensetzungen, die mindestens einen High Intensity Sweetener HIS enthalten, gefunden, bei dem einer stofflichen Zusammensetzung, die mindestens einen HIS enthält, eine Salzubereitung zugesetzt wird.

Im Folgenden wird das neue Verfahren zur Geschmacksmodulation von stofflichen Zusammensetzungen als »erfindungsgemäßes Verfahren« bezeichnet.

### Vorteile der Erfindung

Im Hinblick auf den Stand der Technik war es überraschend und für den Fachmann nicht vorhersehbar, dass die Aufgabe, die der vorliegenden Erfindung zu Grunde lag, mithilfe des erfindungsgemäßen Verfahrens gelöst werden konnte.

Überraschenderweise bewirkte das erfindungsgemäße Verfahren, dass durch die eingesetzten Geschmacksmodulatoren keine unerwünschten physikalischen und/oder chemischen Wechselwirkungen mit den übrigen Bestandteilen der jeweiligen stofflichen Zusammensetzungen, die mindestens einen HIS enthielten, insbesondere der Lebensmittel, Getränke, Genussmittel, Süßungsmittel, Tiernahrungsmitteln, Kosmetika und Pharmazeutika, hervorgerufen wurde und ihr charakteristischer Geschmackseindruck nicht nachteilig beeinflusst, insbesondere nicht verschlechtert oder gar völlig verfälscht wurde.

Insbesondere ermöglichte es das erfindungsgemäße Verfahren, den bitteren Geschmack und den bitteren Nachgeschmack von stofflichen Zusammensetzungen, die mindestens einen HIS enthielten, bereits mit sehr geringen Mengen an Geschmacksmodulatoren signifikant zu reduzieren.

Insbesondere beeinflussten diese überraschend geringen Mengen auch den Farbeindruck der stofflichen Zusammensetzungen nicht nachteilig, was insbesondere im Falle von farbigen Erfrischungsgetränken ein ganz besonderer Vorteil war.

Vor allem war es überraschend, dass die Geschmacksmodulation einer gegebenen stofflichen Zusammensetzung, die mindestens einen HIS enthielt, durch das erfindungsgemäße Verfahren hervorragend reproduzierbar war, was gerade im Hinblick auf die Herstellung von Massenprodukten wie Lebensmittel, Getränke, Genussmittel, Süßungsmittel, Tiernahrungsmittel, Kosmetika und Pharmazeutika ein ganz besonderer Vorteil war.

### Ausführliche Beschreibung der Erfindung

Das erfindungsgemäße Verfahren betrifft die Geschmacksmodulation, insbesondere die Reduktion des bitteren Geschmacks und des bitteren Nachgeschmacks, von stofflichen Zusammensetzungen, die mindestens einen so genannten High Intensity Sweetener (HIS) enthalten.

Vorzugsweise handelt es sich bei den stofflichen Zusammensetzungen um Lebensmittel, Getränke Genussmittel, Süßungsmittel, Tiernahrungsmittel, Kosmetika und Pharmazeutika. Bevorzugt handelt es sich bei den Getränken um Erfrischungsgetränke, besonders bevorzugt coffeinhaltige Erfrischungsgetränke, insbesondere Cola-Getränke.

Die stofflichen Zusammensetzungen enthalten mindestens einen High Intensity Sweetener HIS als Süßungsmittel oder Süßstoff. Unter HIS versteht man Verbindungen synthetischer oder natürlicher Herkunft, die keinen oder im Verhältnis zur Süßkraft vernachlässigbaren physiologischen Brennwert besitzen (non-nutritive sweeteners) und eine um ein Vielfaches höhere Süßkraft als Saccharose aufweisen. Die Süßkraft einer Verbindung ist durch die Verdünnung gegeben, bei der sie ebenso süß wie eine Saccharose-Lösung schmeckt (isosüße Lösung; 0,1 M = 4%), d. h. eine 500fach verdünnte Lösung eines Süßstoffs schmeckt isosüß wie eine Saccharose-Lösung, wenn der Süßstoff eine Süßkraft von 500 hat.

Beispiele geeigneter HIS sind aus Römpp Online 2007, »Süßstoffe« bekannt. Vorzugsweise werden die HIS aus der Gruppe, bestehend aus Acesulfam-Kalium (ACK), Aspartam (ASP), Saccharin (SAC) und seinen Salzen, Cyclamat und seinen Salzen, Aspartam-Acesulfam-Salz, Sucralose, Thaumatin, Stevia, Steviosid und Neohesperidin-Dihydrochalkon, bevorzugt ACK, ASP, SAC und Sucralose, besonders bevorzugt ACK und SAC, insbesondere SAC, ausgewählt.

Vorzugsweise handelt es sich bei der stofflichen Zusammensetzung um eine zuckerarme Zusammensetzung, die weniger als 10 g, vorzugsweise weniger als 1 g, Zucker pro Liter bzw. pro kg Zusammensetzung enthält, insbesondere um eine zuckerfreie Zusammensetzung. Unter Zucker werden vorliegend insbesondere aber nicht aussschliesslich Mono- und Di-Saccharide verstanden.

Vorteilhafterweise handelt es sich bei der stofflichen Zusammensetzung um eine Zusammensetzung mit weniger als 100 kJ, vorzugsweise weniger als 10 kJ, pro Liter oder kg Zusammensetzung.

Vorteilhafterweise handelt es sich bei der stofflichen Zusammensetzung um eine kohlenhydratfreie, insbesondere stärkefreie, Zusammensetzung.

Vorzugsweise handelt es sich bei der stofflichen Zusammensetzung um eine fettarme Zusammensetzung, die weniger als 1 g Fett pro Liter bzw. pro kg Zusammensetzung enthält, insbesondere um eine fettfreie Zusammensetzung.

Bei den zuckerarmen und/oder fettarmen, insbesondere bei den zuckerfreien und/oder fettfreien, Zusammensetzungen handelt es sich vorzugsweise um eine SAC gesüsste Zusammensetzung, insbesondere um ein SAC gesüßtes Getränk.

Bei der erfindungsgemäßen Salzzubereitung handelt es sich gemäß einer Ausführungsform um eine Salzzubereitung, welche Magnesium-, Natrium-, Kalium- und Kalziumionen enthält. Es ist auch denkbar, dass weitere Erdalkali- oder Alkalimetallionen bzw. deren Salze in der Salzzubereitung enthalten sind. Die erfindungsgemäße Salzzubereitung kann natürlichen Ursprungs sein und damit eine Vielzahl an in der Natur vorkommenden Salzen enthalten. Es ist auch denkbar, dass die Salzzubereitung aus einzelnen reinen Salzen der vorgenannten Alkali- und/oder Erdalkalimetallsalzen zusammengestellt wird. Im Falle von natürlichen Salzzubereitungen sind insbesondere Spuren, d.h. Mengen im mg- oder µg-Bereich an Eisen, Zink, Mangan, Kupfer und Se-len enthalten. Als Anionen der Salze werden vorzugsweise Chloride verwendet.

In einer besonderen Ausführungsform entspricht die Konzentration der in der Salzzubereitung enthaltenen Ionen maximal der Konzentration dieser Ionen in humanem Blutplasma. Insbesondere ist der Gehalt an Magnesium maximal 9 Gew.-%, an Natrium max. 8 Gew.-%, an Kalium max. 3 Gew.-% und an Kalzium max. 0,13 Gew.-%. Vorteilhafterweise handelt es sich bei den Salzen jeweils um wasserlösliche Salze. Dabei handelt es sich bevorzugt um Chloride, aber auch alle anderen wasserlöslichen Salze der obengenannten Alkali- und Erdalkalimetalle sind denkbar.

Mit Vorteil liegt die erfindungsgemäße Salzzubereitung in fester oder flüssiger Form vor. Insbesondere hat sich als vorteilhaft erwiesen, die Salzzubereitung als flüssige Salzzubereitung, insbesondere wässrige Lösung, der Zusammensetzung zuzugeben, da eine Flüssigkeit, insbesondere in Getränken, leichter homogenisierbar ist. Daher wird vorteilhafterweise eine feste Salzzubereitung zunächst als Konzentrat in wenig Flüssigkeit gelöst und anschliessend als Salzkonzentrat der Zusammensetzung zugegeben.

Gemäß einer besonderen Ausführungsform der vorliegenden Erfindung handelt es sich bei der Salzzubereitung um ein, vorzugsweise festes, insbesondere sprühgetrocknetes, Meerwasserkonzentrat, d.h. natürliches Meerwasser wird durch Wasserentzug auf ein sehr stark Salz angereichertes flüssiges Konzentrat oder weiter bis zu einem pulverartigen festen Meersalz entwässert. Bevorzugt wird ein Meerwasserkonzentrat dem Natriumchlorid entzogen wurde, d.h. welches einen reduzierten Natriumchloridgehalt im Vergleich zu natürlichem Meerwasser aufweist, verwendet. Es ist auch denkbar, dass andere Salze oder einzelne Kationen bzw. Anionen des natürlichen Meerwassers dem Meerwasser vor der Konzentrierung entzogen werden, z.B., um aus verschiedenen Meeren mit einem unterschiedlichen Salzgehalt bzw. einer unterschiedlichen Salzzusammensetzung ein einheitliches Meerwasserkonzentrat zu erhalten.

Bevorzugt wird die Salzzubereitung der stofflichen Zusammensetzung in einer Menge zugesetzt, sodass die Zusammensetzung eine Konzentration von 20 bis 2000 mg, vorzugsweise ca. 200 mg, Salzzubereitung pro Liter bzw. pro Kilogramm stofflicher Zusammensetzung enthält.

Ganz besonders bevorzugt handelt es sich um eine zuckerfreie Zusammensetzung, insbesondere ein Getränk, die SAC und ein Meerwasserkonzentrat wie beispielsweise Atoligomer® enthält.

Außer den vorstehend beschriebenen, erfindungsgemäß zu verwendenden Salzzubereitungen können noch andere übliche und bekannte geschmacksmodulierende Stoffe in wirksamen Mengen eingesetzt werden. Beispiele geeigneter üblicher und bekannter geschmacksmodulierender Stoffe sind die eingangs beschriebenen.

Ein weiterer Aspekt der Erfindung stellt die Verwendung einer Salzzubereitung als Geschmacksmodulator in stofflichen Zusammensetzung, die mindestens einen High Intensity Sweetener (HIS) als Süßungsmittel enthalten, dar. Bei den dabei verwendeten Salzzubereitungen handelt es sich mit Vorteil um die oben im Zusammenhang mit dem erfindungsgemäßen Verfahren beschriebenen Salzzubereitungen und deren besonderen Ausführungsformen. Hinsichtlich der stofflichen Zusammensetzung handelt es sich insbesondere um die oben im Zusammenhang mit dem erfindungsgemäßen Verfahren beschriebenen Ausführungsformen der stofflichen Zusammensetzungen.

Die beschriebenen Ausführungsformen dienen zur Erläuterung und zum besseren Verständnis der Erfindung und sind in keiner Weise einschränkend zu verstehen. Weitere Merkmale der Erfindung ergeben sich aus der nachfolgenden Beschreibung von bevorzugten Ausführungsformen in Verbindung mit den Unteransprüchen. Hierbei können die einzelnen Merkmale der Erfindung bei einer Ausführungsform jeweils einzeln oder zu mehreren verwirklicht sein und stellen in keiner Weise eine Beschränkung der Erfindung auf die beschriebene Ausführungsform dar. Der Wortlaut der Patentansprüche wird hiermit ausdrücklich zum Gegenstand der Beschreibung gemacht.

### Beispiele

### Beispiele 1 und 2

Die Verwendung von Salzzubereitungen zur Geschmacksmodulation von SAC Für die Beispiele 1 und 2 wurden die folgenden Stoffe verwendet.

### HIS:

Saccharin (SAC) von Sigma-Aldrich Chemie GmbH, Taufkirchen, Deutschland;

### Salzzubereitung:

Atoligomer® von Firma codif, Saint-Malo, Frankreich;

| Menge in 100 g Atoligomer | | | | |
|---|---|---|---|---|
| Chloride | 30,4 g | | Eisen | 4,1 mg |
| Magnesium | 8,55 g | | Zink | 1,1 mg |
| Natrium | 7,62 g | | Mangan | 0,46 mg |
| Kalium | 2,66 g | | Kupfer | 0,23 mg |
| Calcium | 128 mg | | Iod | < 5 mg |
| Phosphor | 125 mg | | Selen | 25 µg |

### Atoligomer®-Lösung:

5 g Atoligomer® + 95 g Wasser vollständig lösen, Filtration 0.45 µm

### Cola-Getränk:

Eine so genannte "Null-Cola" ohne Süßstoff wurde wie folgt hergestellt:
- 36 g Cola-Aroma (Cola-Grundstoff der Firma Döhler, Darmstadt, Artikel-Nr. 200380),
- 7,7 g ortho-Phosphorsäure 85% reinst (Karl Roth GmbH + Co KG, Karlsruhe, Artikel-Nr. 9079.1),
- 3,6 g Zitronensäure 99,5% p.a. (Karl Roth GmbH + Co KG, Karlsruhe, Artikel-Nr. 3958.2),
- 2,4 g Natriumbenzoat der Firma Fluka, Sigma-Aldrich, Steinbrunn, und
- 1,2 g Koffein wasserfrei 99% der Firma Fluka, Sigma-Aldrich, Steinbrunn
wurden in 600 ml Leitungswasser gelöst. Von diesem Konzentrat wurden jeweils 50 ml zu einem Liter "Null-Cola" aufgefüllt.

### Quantitative sensorische Prüfung - allgemeine Testvorschrift:

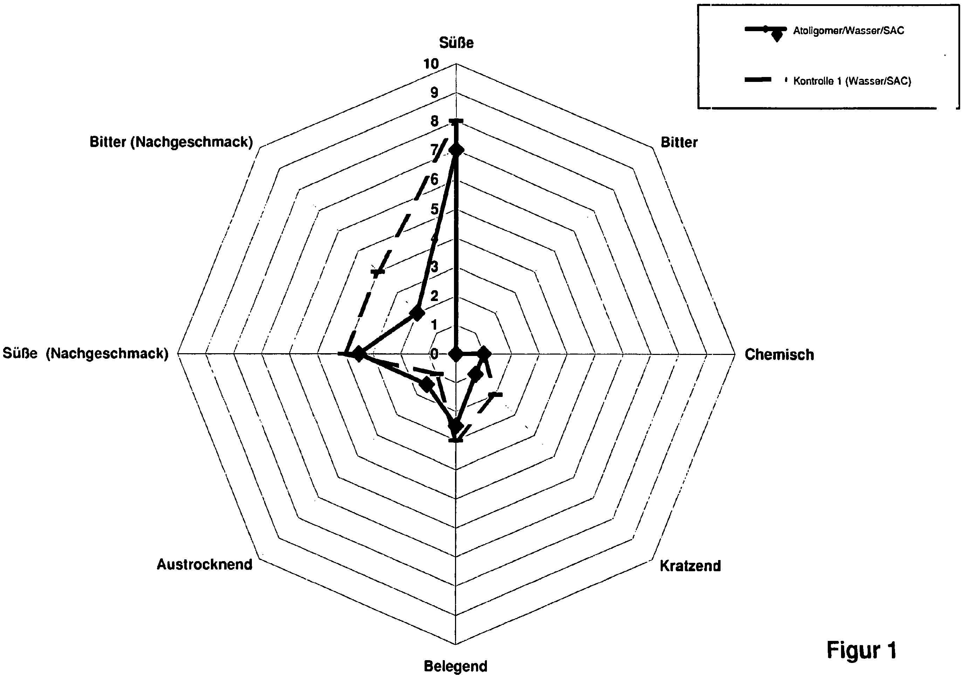

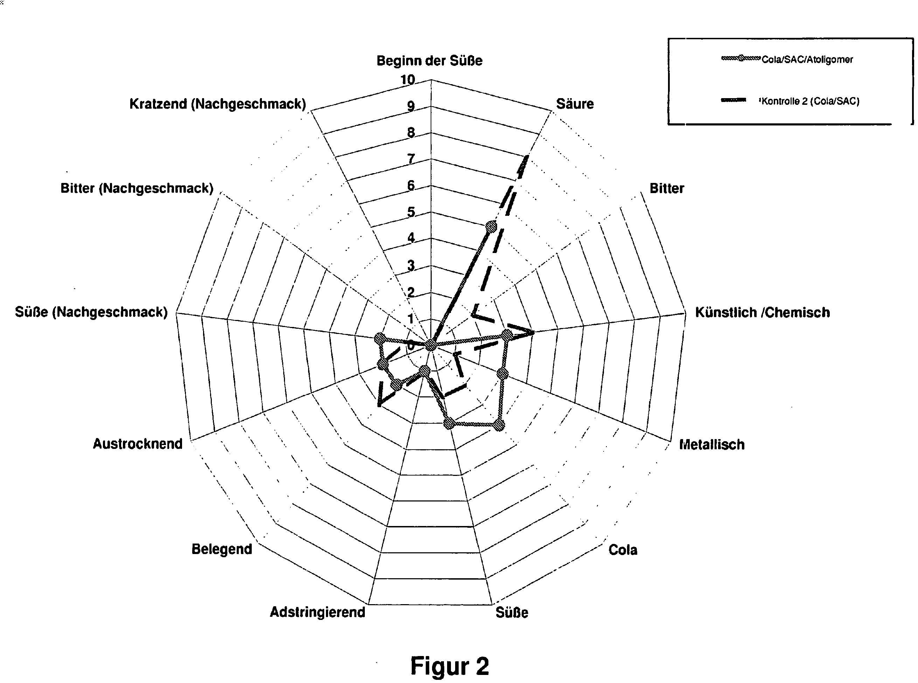

Von den Proben 1 und 2 der Beispiele 1 und 2 sowie den Kontrollproben 1 und 2 wurden Konsensprofile in Übereinstimmung mit DIN 10967-2/ISO 11035 erstellt. Dazu wurden 8 trainierte Probanden, die gemäß den DIN/ISO-Vorschriften ausgewählt worden waren, mit den Produkten durch Definition und Trainieren der vorgegebenen Merkmalseigenschaften vertraut gemacht. Anschließend verkosteten die Probanden die Proben 1 und 2, um den Geschmack, den Nachgeschmack und das Mundgefühl entsprechend den vorgegebenen Merkmalseigenschaften zu bewerten. Die jeweiligen Konsensprofile wurden vom Prüfungsleiter in der Form von Tabellen und sogenannten Spiderplot-Diagrammen (Figur 1 und 2) zusammengefasst. Im Folgenden werden der Übersichtlichkeit halber die Ergebnisse auch als Tabellen wiedergegeben.

### Proben 1 und 2 und Kontrollproben 1 und 2 - stoffliche Zusammensetzung:

Die Proben 1 und 2 und die Kontrollproben 1 und 2 wiesen die nachstehend beschriebenen stofflichen Zusammensetzungen auf. Die jeweiligen Abkürzungen, die in den nachfolgenden Tabellen verwendet werden, werden in Klammern angegeben.

### Kontrollprobe 1:

Wasser + 180 mg/l SAC
(Abkürzung: Wasser/SAC)

### Kontrollprobe 2:

Null-Cola + 180 mg/l SAC
(Abkürzung: Cola/SAC)

### Probe 1 - Beispiel 1:

Wasser + 180 mg/l SAC + 4 ml/l Atoligomer® Lösung
(Abkürzung: Wasser/SAC/Atoligomer)

### Probe 2 - Beispiel 2:

Null-Cola + 180 mg/l SAC + 4 ml/l Atoligomer® Lösung
(Abkürzung: Cola/SAC/ Atoligomer)

### Proben 1 und 2 und Kontrollproben 1 und 2 - Versuchsergebnisse:

Die Ergebnisse der quantitativen sensorischen Prüfung der Probe 1 und der Kontrollprobe 1 sind in der Tabelle 1 zusammengestellt.

Die Ergebnisse der quantitativen sensorischen Prüfung der Probe 2 und der Kontrollprobe 2 sind in der Tabelle 2 zusammengestellt.

Bei beiden Tabellen bedeutet der Messwert 0, dass die betreffende sensorische Eigenschaft nicht vorhanden war, während der Messwert 10 bedeutet, dass die betreffende sensorische Eigenschaft stark vorhanden war.

**Tabelle 1: Quantitative sensorische Prüfung der Probe 1 und der Kontrollprobe 1 - Konsensprofile**

| Kontrollprobe/ Probe | Geschmack | | Mundgefühl | | | | Nachgeschmack | |
|---|---|---|---|---|---|---|---|---|
| | S^{a)} | Bt^{b)} | C^{c)} | K^{d)} | Bl^{e)} | A^{f)} | | S(N)^{g)}Bt(N)^{h)} |
| | | | | | | | | |
| Kontrollprobe 1 Wasser/SAC | 8 | 0 | 1 | 2 | 3 | 1 | 4 | 4 |
| Probe 1 Wasser/SAC/ Atoligomer® | 7 | 0 | 1 | 1 | 2,5 | 1,5 | 3,5 | 2 |
| | | | | | | | | |

| | | | | | | | | |
|---|---|---|---|---|---|---|---|---|
| a) S = süß; b) Bt = bitter; c) C = chemisch; d) K = kratzend; e) BI = belegend; f) A = austrocknend; g) S(N) = süßer Nachgeschmack; h) Bt(N) = bitterer Nachgeschmack; | | | | | | | | |

Die Ergebnisse der Tabelle 1 und der Figur 1 belegen, dass Atoligomer® einen so starken geschmacksmodulierenden Effekt aufwies, dass der bittere Nachgeschmack von SAC in Wasser stark reduziert wurde.

**Tabelle 2: Quantitative sensorische Prüfung der Probe 2 und der Kontrollprobe 2 - Konsensprofile**

| Kontrollprobe/ Probe | Geschmack | | | | | | | Mundgefühl | | | Nachgeschmack | |
|---|---|---|---|---|---|---|---|---|---|---|---|---|
| | BS^{a)} | Sa^{b)} | Bt^{c)} | KC^{d}) | M^{e)} | Co^{f)} | S^{g)} | A^{h)} | Blⁱ⁾ | Au^{j)} | S(N)^{k)} | Bt(N)^{l)} |
| | | | | | | | | | | | | |
| Kontrollprobe 2 Cola/SAC | 0 | 8 | 2 | 4 | 1 | 2 | 2 | 1 | 3 | 2 | 1 | 0 |
| Probe 2 Cola/SAC/ Atoligomer | 0 | 5 | 0 | 3 | 3 | 4 | 3 | 1 | 2 | 2 | 2 | 0 |
| | | | | | | | | | | | | |

| | | | | | | | | | | | | |
|---|---|---|---|---|---|---|---|---|---|---|---|---|
| a) BS = Beginn der Süße; b) Sa = sauer; c) Bt = bitter; d) KC = künstlich/chemisch; e) M = metallisch; f) Co = Cola; g) S = süß; h) A = adstringierend; i) BI = belegend; j) Au = austrocknend; k) S(N) = süßer Nachgeschmack; l) Bt(N) = bitterer Nachgeschmack; | | | | | | | | | | | | |

Die Ergebnisse der Tabelle 2 und Figur 2 belegen, dass mithilfe von Atoligomer® der bittere Geschmack von SAC in Cola signifikant reduziert werden konnte.

## Patentansprüche

1. Verwendung einer Salzzubereitung als Geschmacksmodulator in stofflichen Zusammensetzungen, die mindestens einen High Intensity Sweetener HIS als Süßungsmittel enthalten, **dadurch gekennzeichnet, dass** die Salzzubereitung der Reduzierung des bitteren Geschmacks und/oder Nachgeschmacks der stofflichen Zusammensetzungen dient; mindestens vier Magnesium-, Natrium-, Kalium- und Calcium-Salze enthält und wobei die Salzzubereitung maximal 9 Gew.-% Magnesium, 8 Gew.-% Natrium, 3 Gew.-% Kalium und 0,13 Gew.-% Calcium enthält, und es sich bei der Salzzubereitung um ein, vorzugsweise festes, insbesondere sprühgetrocknetes, Meerwasserkonzentrat handelt.

2. Verwendung nach dem vorhergehenden Anspruch, **dadurch gekennzeichnet, dass** es sich um wasserlösliche Salze handelt.

3. Verwendung nach einem der vorhergehenden Ansprüche, **dadurch gekennzeichnet, dass** die Salzzubereitung flüssig oder fest ist.

4. Verwendung nach einem der vorhergehenden Ansprüche, **dadurch gekennzeichnet, dass** das Meerwasserkonzentrat Natriumchlorid-reduziert ist.

5. Verwendung nach einem der vorhergehenden Ansprüche, **dadurch gekennzeichnet, dass** die stoffliche Zusammensetzung 0,002 bis 0,2 Gew.-%. insbesondere 0,02 Gew.-%, Salzzubereitung enthält.

6. Verwendung nach einem der vorhergehenden Ansprüche, **dadurch gekennzeichnet, dass** es sich bei den stofflichen Zusammensetzungen um Lebensmittel, Getränke, Genussmittel, Süßungsmittel, Tiernahrungsmittel, Kosmetika und Pharmazeutika handelt.

7. Verwendung nach einem der vorhergehenden Ansprüche, **dadurch gekennzeichnet, dass** es sich bei der stofflichen Zusammensetzung um eine zuckerarme Zusammensetzung mit weniger als 10 g Zucker pro Liter bzw. kg Zusammensetzung, insbesondere um eine zuckerfreie Zusammensetzung, handelt.

8. Verwendung nach einem der vorhergehenden Ansprüche, **dadurch gekennzeichnet, dass** der oder die HIS aus der Gruppe, bestehend aus Acesulfam-Kalium, Aspartam, Saccharin und seinen Salzen, Cyclamat und seinen Salzen, Aspartam-Acesulfam-Salz, Sucralose, Thaumatin, Stevia, Steviosid und Neohesperidin-Dihydrochalkon, ausgewählt wird oder werden.

9. Verwendung nach einem der vorhergehenden Ansprüche, **dadurch gekennzeichnet, dass** es sich bei dem HIS um Saccharin (SAC) handelt.

10. Verwendung nach einem der vorhergehenden Ansprüche, **dadurch gekennzeichnet, dass** es sich um eine kohlenhydratarme, insbesondere kohlenhydratfreie, Zusammensetzung handelt.

11. Verwendung nach einem der vorhergehenden Ansprüche, **dadurch gekennzeichnet, dass** es sich um eine fettfreie Zusammensetzung handelt.

12. Verwendung nach einem der vorhergehenden Ansprüche, **dadurch gekennzeichnet, dass** es sich bei der stofflichen Zusammensetzung um ein, insbesondere koffeinhaltiges, Saccharin gesüßtes, vorzugsweise zuckerfreies, Getränk handelt.

13. Verfahren zur Geschmacksmodulation von stofflichen Zusammensetzungen, wobei bei der Geschmacksmodulation der bittere Geschmack und/oder Nachgeschmack der stofflichen Zusammensetzungen reduziert wird, die mindestens einen High Intensity Sweetener (HIS) als Süßungsmittel enthalten, **dadurch gekennzeichnet, dass** man den stofflichen Zusammensetzungen eine Salzzubereitung zusetzt, **dadurch gekennzeichnet, dass** die Salzzubereitung mindestens vier Magnesium-, Natrium-, Kalium- und Calcium-Salze enthält und wobei die Salzzubereitung maximal 9 Gew.-% Magnesium, 8 Gew.-% Natrium, 3 Gew.-% Kalium und 0,13 Gew.-% Calcium enthält, und es sich bei der Salzzubereitung um ein, vorzugsweise festes, insbesondere sprühgetrocknetes, Meerwasserkonzentrat handelt.

14. Verfahren nach Anspruch 13, **dadurch gekennzeichnet, dass** es sich um wasserlösliche Salze handelt.

15. Verfahren nach einem der Ansprüche 13-14, **dadurch gekennzeichnet, dass** die Salzzubereitung flüssig oder fest ist.

16. Verfahren nach einem der Ansprüche 13-15, **dadurch gekennzeichnet, dass** das Meerwasserkonzentrat Natriumchlorid-reduziert ist.

17. Verfahren nach einem der Ansprüche 13-16, **dadurch gekennzeichnet, dass** die Salzzubereitung in einer Menge zugesetzt wird, dass in stofflichen Zusammensetzungen eine Konzentration von 20 bis 2000 mg, insbesondere 200 mg, pro Liter bzw. kg Zusammensetzung resultiert.

18. Verfahren nach einem der Ansprüche 13-17, **dadurch gekennzeichnet, dass** die stofflichen Zusammensetzungen Lebensmittel, Getränke, Genussmittel, Süßungsmittel, Tiernahrungsmittel, Kosmetika und Pharmazeutika sind.

19. Verfahren nach einem der Ansprüche 13-18, **dadurch gekennzeichnet, dass** es sich bei der stofflichen Zusammensetzung um eine zuckerarme Zusammensetzung mit weniger als 10 g Zucker pro Liter bzw. kg Zusammensetzung, insbesondere um eine zuckerfreie Zusammensetzung, handelt.

20. Verfahren nach einem der Ansprüche 13-19, **dadurch gekennzeichnet, dass** der oder die HIS aus der Gruppe, bestehend aus Acesulfam-Kalium, Aspartam, Saccharin und seinen Salzen, Cyclamat und seinen Salzen, Aspartam-Acesulfam-Salz, Sucralose, Thaumatin und Neohesperidin-Dihydrochalkon, vorzugsweise Saccharin, ausgewählt wird oder werden.

21. Verfahren nach einem der Ansprüche 13-20, **dadurch gekennzeichnet, dass** es sich um eine kohlenhydratarme, insbesondere kohlenhydratfreie, Zusammensetzung handelt.

22. Verfahren nach einem der Ansprüche 13-21, **dadurch gekennzeichnet, dass** es sich um eine fettfreie Zusammensetzung handelt.

23. Verfahren nach einem der Ansprüche 13-22, **dadurch gekennzeichnet, dass** es sich bei der stofflichen Zusammensetzung um ein, insbesondere koffeinhaltiges, Saccharin gesüßtes, vorzugsweise zuckerfreies, Getränk handelt.

## Claims

1. Use of a salt preparation as taste modulator in compositions of matter which comprise as sweetener at least one high intensity sweetener HIS, **characterized in that** the salt preparation serves for reduction of the bitter taste and/or aftertaste of the compositions of matter; comprises at least four salts of magnesium, sodium, potassium and calcium, and wherein the salt preparation comprises at most 9% by weight of magnesium, 8% by weight of sodium, 3% by weight of potassium and 0.13% by weight of calcium, and wherein the salt preparation is a preferably solid, in particular spray-dried, sea water concentrate.

2. Use according to the preceding claim, **characterized in that** the salts are watersoluble salts.

3. Use according to any one of the preceding claims, **characterized in that** the salt preparation is liquid or solid.

4. Use according to any one of the preceding claims, **characterized in that** the sea water concentrate is sodium chloride reduced.

5. Use according to any one of the preceding claims, **characterized in that** the composition of matter comprises 0.002 to 0.2% by weight, in particular 0.02% by weight, of salt preparation.

6. Use according to any one of the preceding claims, **characterized in that** the compositions of matter are foods, drinks, articles consumed for pleasure, sweeteners, animal feeds, cosmetics or pharmaceuticals.

7. Use according to any one of the preceding claims, **characterized in that** the composition of matter is a low-sugar composition having less than 10 g sugar per liter or kg of composition, in particular a sugar-free composition.

8. Use according to any one of the preceding claims, **characterized in that** the HIS is or HISs are selected from the group consisting of acesulfame potassium, aspartame, saccharin and salts thereof, cyclamate and salts thereof, aspartame-acesulfame salt, sucralose, thaumatin, stevia, stevioside and neohesperidine dihydrochalcone.

9. Use according to any one of the preceding claims, **characterized in that** the HIS is saccharin (SAC).

10. Use according to any one of the preceding claims, **characterized in that** the composition is a low-carbohydrate, in particular carbohydrate-free, composition.

11. Use according to any one of the preceding claims, **characterized in that** the composition is a fat-free composition.

12. Use according to any one of the preceding claims, **characterized in that** the composition of matter is a in particular caffeine-containing, saccharin-sweetened, preferably sugar-free, drink.

13. A process for the taste modulation of compositions of matter, wherein in the taste modulation the bitter taste and/or aftertaste of the compositions of matter is reduced, which comprise as sweetener at least one high intensity sweetener (HIS), **characterized in that** a salt preparation is added to the compositions of matter, **characterized in that** the salt preparation comprises at least four salts of magnesium, sodium, potassium and calcium, and wherein the salt preparation comprises at most 9% by weight of magnesium, 8% by weight of sodium, 3% by weight of potassium and 0.13% by weight of calcium, and wherein the salt preparation is a preferably solid, in particular spray-dried, sea water concentrate.

14. The process according to claim 13, **characterized in that** the salts are watersoluble salts.

15. The process according to any one of claims 13-14, **characterized in that** the salt preparation is liquid or solid.

16. The process according to any one of claims 13-15, **characterized in that** the sea water concentrate is sodium chloride reduced.

17. The process according to any one of claims 13-16, **characterized in that** the salt preparation is added in an amount such that a concentration of 20 to 2000 mg, in particular 200 mg, per liter or kg of composition results in compositions of matter.

18. The process according to any one of claims 13-17, **characterized in that** the compositions of matter are foods, drinks, articles consumed for pleasure, sweeteners, animal feeds, cosmetics or pharmaceuticals.

19. The process according to any one of claims 13-18, **characterized in that** the composition of matter is a low-sugar composition having less than 10 g sugar per liter or kg of composition, in particular a sugar-free composition.

20. The process according to any one of claims 13-19, **characterized in that** the HIS is or HISs are selected from the group consisting of acesulfame potassium, aspartame, saccharin and salts thereof, cyclamate and salts thereof, aspartame-acesulfame salt, sucralose, thaumatin, and neohesperidine dihydrochalcone, preferably saccharin.

21. The process according to any one of claims 13-20, **characterized in that** the composition is a low-carbohydrate, in particular carbohydrate-free, composition.

22. The process according to any one of claims 13-21, **characterized in that** the composition is a fat-free composition.

23. The process according to any one of claims 13-22, **characterized in that** the composition of matter is a in particular caffeine-containing, saccharin-sweetened, preferably sugar-free, drink.

## Revendications

1. Utilisation d'une composition de sel comme modulateur de goût dans des compositions de substances, qui comprennent au moins un édulcorant intense HIS à titre d'édulcorant, **caractérisée en ce que** la composition de sel sert à réduire le goût et/ou l'arrière-goût amer des compositions de substances ; comprend au moins quatre sels de magnésium, de sodium, de potassium et de calcium et où la composition de sel comprend au maximum 9 % en poids de magnésium, 8 % en poids de sodium, 3 % en poids de potassium et 0,13 % en poids de calcium, et la composition de sel est un concentré d'eau de mer, de préférence solide, en particulier séché par pulvérisation.

2. Utilisation selon la revendication précédente, **caractérisée en ce qu'**il s'agit de sels hydrosolubles.

3. Utilisation selon l'une des revendications précédentes, **caractérisée en ce que** la composition de sel est liquide ou solide.

4. Utilisation selon l'une des revendications précédentes, **caractérisée en ce que** le chlorure de sodium du concentré d'eau de mer est réduit.

5. Utilisation selon l'une des revendications précédentes, **caractérisée en ce que** la composition de substances comprend 0,002 à 0,2 % en poids, en particulier 0,02 % en poids de composition de sel.

6. Utilisation selon l'une des revendications précédentes, **caractérisée en ce que** les compositions de substances sont des produits alimentaires, des boissons, des friandises, des édulcorants, des aliments pour animaux, des cosmétiques et des produits pharmaceutiques.

7. Utilisation selon l'une des revendications précédentes, **caractérisée en ce que** la composition de substances est une composition pauvre en sucre avec moins de 10 g de sucre par litre ou kg de composition, en particulier une composition exempte de sucre.

8. Utilisation selon l'une des revendications précédentes, **caractérisée en ce que** le ou les HIS est ou sont choisi(s) dans le groupe constitué par l'acésulfame potassium, l'aspartame, la saccharine et ses sels, le cyclamate et ses sels, le sel d'aspartame acésulfame, le sucralose, la thaumatine, la stévia, le stévioside et la dihydrochalcone de néohespéridine.

9. Utilisation selon l'une des revendications précédentes, **caractérisée en ce que** l'édulcorant intense est la saccharine (SAC).

10. Utilisation selon l'une des revendications précédentes, **caractérisée en ce qu'**il s'agit d'une composition pauvre en hydrates de carbone, notamment exempte d'hydrates de carbone.

11. Utilisation selon l'une des revendications précédentes, **caractérisée en ce qu'**il s'agit d'une composition exempte de matière grasse.

12. Utilisation selon l'une des revendications précédentes, **caractérisée en ce que** la composition de substances est une boisson, édulcorée à la saccharine, de préférence exempte de sucres, contenant en particulier de la caféine.

13. Procédé de modulation du goût de compositions de substances, dans lequel, lors de la modulation du goût, le goût et/ou l'arrière goût amer des compositions de substances est réduit, les compositions de substances comprenant au moins un édulcorant intense (HIS) à titre d'édulcorant, **caractérisé en ce que** l'on ajoute une composition de sel aux compositions de substances, **caractérisé en ce que** la composition de sel comprend au moins quatre sels de magnésium, de sodium, de potassium et de calcium et où la composition de sel comprend au maximum 9 % en poids de magnésium, 8 % en poids de sodium, 3 % en poids de potassium et 0,13 % en poids de calcium, et la composition de sel est un concentré d'eau de mer, de préférence solide, en particulier séché par pulvérisation.

14. Procédé selon la revendication 13, **caractérisé en ce qu'**il s'agit de sels hydrosolubles.

15. Procédé selon l'une des revendications 13 à 14, **caractérisé en ce que** la composition de sel est liquide ou solide.

16. Procédé selon l'une des revendications 13 à 15, **caractérisé en ce que** le chlorure de sodium du concentré d'eau de mer est réduit.

17. Procédé selon l'une des revendications 13 à 16, **caractérisé en ce que** la composition de sel est ajoutée en une quantité telle qu'il en résulte dans les compositions de substances une concentration de 20 à 2000 mg, en particulier 200 mg par litre ou kg de composition.

18. Procédé selon l'une des revendications 13 à 17, **caractérisé en ce que** les compositions de substances sont des produits alimentaires, des boissons, des friandises, des édulcorants, des aliments pour animaux, des cosmétiques et des produits pharmaceutiques.

19. Procédé selon l'une des revendications 13 à 18, **caractérisé en ce que** la composition de substances est une composition pauvre en sucre avec moins de 10 g de sucre par litre ou kg de composition, en particulier une composition exempte de sucre.

20. Procédé selon l'une des revendications 13 à 19, **caractérisé en ce que** le ou les HIS est ou sont choisi(s) dans le groupe constitué par l'acésulfame potassium, l'aspartame, la saccharine et ses sels, le cyclamate et ses sels, le sel d'aspartame acésulfame, le sucralose, la thaumatine, et la dihydrochalcone de néohespéridine, de préférence la saccharine.

21. Procédé selon l'une des revendications 13 à 20, **caractérisé en ce qu'**il s'agit d'une composition pauvre en hydrates de carbone, notamment exempte d'hydrates de carbone.

22. Procédé selon l'une des revendications 13 à 21, **caractérisé en ce qu'**il s'agit d'une composition exempte de matière grasse.

23. Procédé selon l'une des revendications 13 à 22, **caractérisé en ce que** la composition de substances est une boisson, édulcorée à la saccharine, de préférence exempte de sucres, contenant en particulier de la caféine.
